# EUROPÄISCHE PATENTSCHRIFT

(11) **EP 4 493 836 B1**
(45) Veröffentlichungstag und Bekanntmachung des Hinweises auf die Patenterteilung: **22.10.2025**
(21) Anmeldenummer: 23708706.9
(22) Anmeldetag: 17.02.2023
(51) Int. Cl.: F16D 51/00

(54) **FAHRZEUGTROMMELBREMSE**
VEHICLE DRUM BRAKE
FREIN À TAMBOUR DE VÉHICULE

(30) Priorität: 17.03.2022 DE 102022106232
(43) Veröffentlichungstag der Anmeldung: 22.01.2025
(73) Patentinhaber: BPW Bergische Achsen Kommanditgesellschaft, 51674 Wiehl (DE)
(72) Erfinder: KÖHLER, Daniel, 51645 Gummersbach (DE); PEHLE, Michael, 51674 Wiehl (DE); KÖCHL, Ulrich, 51674 Wiehl (DE); HEIMBRUCH, Tim, 51688 Wipperfürth (DE)
(74) Vertreter: DREISS Patentanwälte PartG mbB
(86) Internationale Anmeldenummer: PCT/EP2023/053997
(87) Internationale Veröffentlichungsnummer: WO 2023/174632

(56) Entgegenhaltungen:
- US-A- 2 003 055
- US-A- 2 113 608
- US-A- 2 750 011
- US-A- 4 646 885
- US-B1- 6 293 374
- US-B1- 6 371 259

## Beschreibung

Die Erfindung betrifft eine Fahrzeugtrommelbremse, insbesondere für einen Nutzfahrzeuganhänger, mit einer einen Innenraum umschließenden Trommelanordnung aus einem Trommelkörper, welcher gegenüber einer Fahrzeugachse rotierbar ist, und einem Abdeckblech, welches fest mit der Fahrzeugachse verbunden ist,
wobei der Trommelkörper topfförmig gestaltet ist und sich aus einem innenseitig mit einer Bremsfläche versehenen Trommelmantel und einem an einer Stirnseite des Trommelmantels angeordneten Flansch zusammensetzt, wobei der Flansch mit einem Nabenflansch einer gegenüber der Fahrzeugachse rotierbaren Radnabe verschraubt ist,
wobei das Abdeckblech die andere, zweite Stirnseite des Trommelmantels bedeckt und an einem Bremsträger befestigt ist, der mit der Fahrzeugachse verbunden ist,
und wobei zwei in dem Innenraum angeordnete Bremsbacken beweglich an dem Bremsträger gelagert und gegen die Bremsfläche des Trommelmantels aufspreizbar sind.

Eine Fahrzeugtrommelbremse mit diesen Merkmalen ist zum Beispiel aus der EP 0 519 340 B1 bekannt. Als Bremstrommel dient ein topfförmig gestalteter Trommelkörper aus einem innenseitig mit einer Bremsfläche versehenen Trommelmantel und einem Flansch an dessen Stirnseite. Der Flansch ist mit einem Nabenflansch einer an der Fahrzeugachse rotierbaren Radnabe verschraubt. Nach fahrzeuginnen abgedeckt ist der Trommelkörper durch ein an einem Bremsträger befestigtes Abdeckblech, welches dem Rand der Bremstrommel mit geringem Abstand gegenüberliegt. Zwei Bremsbacken sind beweglich an dem Bremsträger gelagert und gegen die Bremsfläche der Bremstrommel aufspreizbar.

Eine weitere Trommelbremse nach dem Stand der Technik ist aus der US 6 293 374 B1 bekannt, die eine topfförmige Bremse mit einem geschlossenen Innenraum offenbart.

Beim Bremsen bildet sich Bremsstaub in der Bremstrommel. Die Staubpartikel, aus denen sich der Bremsstaub zusammensetzt, rühren überwiegend von dem sich durch Verschleiß abnutzenden Reibbelag der Bremsbacken her, aber auch von der sich ebenfalls abnutzenden Bremsfläche an der Innenwand des Trommelmantels. Aus Gründen des Umweltschutzes sollte allerdings der im Bremsbetrieb zwangsläufig entstehende Bremsstaub möglichst nicht in die Umgebung gelangen und damit die Umwelt belasten.

Ohne einen konkreten Bezug zu dieser Umweltthematik ist in der US 2,003,055 eine Trommelbremse für Fahrzeuge offenbart, bei der dort, wo sich die Bremstrommel und das mit der Fahrzeugachse verbundene Abdeckblech relativ nahekommen, zusätzlich eine Abdichtung vorhanden ist. Da im Fahrbetrieb die Bremstrommel relativ zu dem Abdeckblech rotiert, erfolgt die Abdichtung mittels einer Schleifdichtung, bei der Metall auf Metall arbeitet. Zur Realisierung der Schleifdichtung ist in einer stufenförmigen Ausnehmung der Bremstrommel ein federelastischer Schleifring aus Metall befestigt. Dieser stützt sich mit einer ringförmigen Fläche unter leichtem Druck gegen eine ebenfalls ringförmige Fläche an dem Abdeckblech.

Ziel der Erfindung sind Maßnahmen, um bei einer Fahrzeugtrommelbremse die mit den bremsbedingten Verschleißprozessen einhergehenden Belastungen für die Umwelt zu reduzieren.

Zur **Lösung** dieser Aufgabe wird bei einer Fahrzeugtrommelbremse mit den eingangs genannten Merkmalen vorgeschlagen, dass der Innenraum eine vollständig von Wänden umschlossene und nach außen abgedichtete Kammer ist, und dass zumindest ein Wandabschnitt der Wände aus einem für Luft durchlässigen und Staubpartikel zurückhaltenden Filtermaterial und/oder aus einem Druckausgleichselement besteht.

Die erfindungsgemäßen Maßnahmen bewirken, dass der im Laufe des Bremsbetriebs zwangsläufig im Innenraum der Trommelanordnung anfallende Bremsstaub nicht in die Umgebung gelangen kann. Hierzu ist vorgesehen, dass der Innenraum der Trommelanordnung zugleich eine vollständig von Wänden umschlossene und nach außen, d. h. in die Umgebung, vollständig abgedichtete Kammer ist. Die Wände der solcherart gekapselten Kammer sind die Innenwände, Innenwandabschnitte bzw. Innenseiten der gemeinsam den Innenraum umschließenden Bauteile bzw. Baugruppen der Fahrzeugtrommelbremse.

Zu diesen Bauteilen bzw. Baugruppen zählen zunächst der Trommelmantel und der Flansch des Trommelkörpers, sowie das fest montierte Abdeckblech. Zu den Bauteilen bzw. Baugruppen gehören aber auch alle übrigen an der vollständigen Umschließung des Innenraums beteiligten Wände und Wandabschnitte. Dies können, abhängig vom konkreten Bautyp der Fahrzeugtrommelbremse, zum Beispiel die dem Innenraum zugewandten Wände und Wandabschnitte des Nabengrundkörpers, des Nabenflanschs, des Bremsträgers und/oder des Achskörpers sein.

Infolge der vollständigen Umschließung des Innenraums durch Wände und Wandabschnitte, gegebenenfalls vervollständigt durch Dichtungen dort, wo die einzelnen Wände bzw. Wandabschnitte aneinandergrenzen, wird insgesamt eine Kammer geschaffen, aus der Staubpartikel nicht entweichen können.

Wichtig ist allerdings nur die Undurchlässigkeit für Staubpartikel, so dass solche Partikel nicht in die Umgebung austreten können. Ein Luftaustausch mit der Umgebung muss hingegen nicht nachteilig sein und kann sogar angestrebt sein. Daher sieht eine erste Ausführungsform der Erfindung vor, dass zumindest ein Wandabschnitt der den Innenraum umschließenden Wände und Wandabschnitte aus einem Filtermaterial besteht, welches für Luft, jedoch nicht für Staubpartikel durchlässig ist. Mit anderen Worten: Dieser Wandabschnitt ist zwar in konstruktiver Hinsicht eine Art Öffnung in die Umgebung. Da jedoch die Öffnung vollständig mit Filtermaterial ausgefüllt oder angefüllt ist, stellt sie einen - luftdurchlässigen - Wandabschnitt der Kammer dar, der Bremsstaubpartikel vollständig zurückzuhalten vermag.

Bei einer zweiten Ausführungsform der Erfindung ist der Innenraum ebenfalls eine vollständig von Wänden umschlossene und nach außen abgedichtete Kammer, wobei im Fall dieser zweiten Ausführungsform zumindest ein Wandabschnitt der Wände aus einem Druckausgleichselement besteht. Die Wirkung des Druckausgleichselements besteht darin, einen Überdruck im Innenraum gegenüber dem Druck in der Umgebung zu vermeiden, zumindest aber die Druckdifferenz zwischen innen und außen so gering zu halten, dass Bremsstaubpartikel nicht aufgrund der Druckdifferenz in die Umgebung entweichen. Das Druckausgleichselement ist auch dann von Vorteil, wenn die Kammer keinerlei Öffnung in die Umgebung aufweist und die Staubpartikel zum Beispiel im Inneren der Kammer in einer Partikelfalle aufgefangen und darin gesammelt werden. In diesem Fall müssen Temperatur- und damit Druckschwankungen, die durch die Bremsenergie hervorgerufen werden, über das Druckausgleichselement kompensiert werden.

Die zwei genannten Alternativen können auch kombiniert werden. Dies kann z. B. geschehen, indem ein- und derselbe Wandabschnitt der Wände aus dem für Luft durchlässigen und Staubpartikel zurückhaltenden Filtermaterial besteht, und zugleich als Druckausgleichselement ausgebildet ist. Oder ein Wandabschnitt besteht aus dem für Luft durchlässigen und Staubpartikel zurückhaltenden Filtermaterial, und ein anderer Wandabschnitt ist als Druckausgleichselement ausgebildet.

Im Fall der Variante mit luftdurchlässigem Wandabschnitt ist es für den Luftaustausch nicht entscheidend, in welchem der gemeinsam den Innenraum umschließenden Bauteile bzw. Baugruppen sich dieser Wandabschnitt befindet. Entscheidend ist vielmehr, dass der Staubpartikel zurückhaltende Wandabschnitt eine den Innenraum mit der Umgebung verbindende Öffnung in einer der Wände ist, und dass die Öffnung durch das Filtermaterial verschlossen ist. Als Filtermaterial dient vorzugsweise ein Partikelfilter mit Filtercharakteristik speziell für Bremsstäube.

Gemäß einer bevorzugten Ausgestaltung ist das für Luft und nicht für Staubpartikel durchlässige Filtermaterial von einem Filterrahmen umschlossen, der in die Öffnung eingesetzt ist. Vorzugsweise ist der Filterrahmen lösbar in die Öffnung eingesetzt.

Hinsichtlich der Position des aus Filtermaterial bestehenden Wandabschnitts an der Fahrzeugbremstrommel wird gemäß einer ersten Alternative vorgeschlagen, dass sich der Wandabschnitt aus Filtermaterial in dem Trommelkörper befindet, vorzugsweise in dem Flansch des Trommelkörpers.

Gemäß einer zweiten Alternative wird vorgeschlagen, dass sich der Wandabschnitt aus Filtermaterial in dem Abdeckblech befindet.

Gemäß einer dritten Alternative wird vorgeschlagen, dass eine der die Kammer umschließenden Wände durch Flächen des Nabenflanschs der Radnabe gebildet wird, und dass sich der Wandabschnitt aus Filtermaterial in dem Nabenflansch befindet.

Gemäß einer vierten Alternative wird vorgeschlagen, dass eine der die Kammer umschließenden Wände durch Flächen des Bremsträgers gebildet wird, und dass sich der Wandabschnitt aus Filtermaterial an dem Bremsträger befindet.

Gemäß einer fünften Alternative wird vorgeschlagen, dass eine der die Kammer umschließenden Wände durch Flächen des Achskörpers gebildet wird, und dass sich der Wandabschnitt aus Filtermaterial an dem Achskörper befindet.

Die vorgenannten fünf Alternativen sind beliebig durch Addieren kombinierbar. Zum Beispiel kann sich ein erster Wandabschnitt aus Filtermaterial an dem Trommelkörper und ein zweiter Wandabschnitt aus Filtermaterial an dem Abdeckblech befinden. Oder es kann sich ein erster Wandabschnitt aus Filtermaterial an dem Flansch des Trommelkörpers und ein zweiter Wandabschnitt aus Filtermaterial an dem Nabenflansch der Radnabe befinden, u.s.w..

Die fünf Alternativen sind auch baulich kombinierbar. Zum Beispiel kann der Wandabschnitt aus Filtermaterial so angeordnet und von solcher Erstreckung sein, dass er sich mit einem Teil seiner Fläche bzw. Wandfläche an dem Abdeckblech und mit dem übrigen Teil seiner Fläche bzw. Wandfläche an dem Bremsträger befindet.

Gemäß einer weiteren Ausgestaltung kann eine Schleifdichtung vorhanden sein, welche sich an der zweiten Stirnseite des Trommelmantels über dessen gesamten Umfang erstreckt und ausgebildet ist, den Trommelmantel gegenüber dem Abdeckblech abzudichten. Eine hierfür geeignete Schleifdichtung ist z. B. ein Wellendichtring.

Bestandteil der Schleifdichtung kann eine Dichtlippe sein, wobei sich eine an der Dichtlippe ausgebildete Schleiffläche an einer ringförmigen Fläche abstützt, die Bestandteil des Abdeckblechs ist. Bevorzugt ist hierbei eine axiale Ausrichtung der ringförmigen Fläche.

Für eine erleichterte Montage des Abdeckblechs kann dieses zweiteilig aufgebaut sein und aus zwei getrennten Hälften bestehen, wobei die Trennstelle mit einem Dichtmittel verschlossen ist.

Die Kammer kann entweder einteilig mit einem nicht unterteilten Innenraumvolumen ausgebildet sein. Oder aber die Kammer ist mehrteilig aus räumlich getrennt angeordneten Kammerbereichen aufgebaut, die jeweils eine Zone des Innenraums aufnehmen. Da aber die Kammerbereiche und Zonen über eine für Luft und Staubpartikel ungehindert passierbare Öffnung in Verbindung stehen, bilden die Kammerbereiche gemeinsam einen zusammenhängenden Hohlraum.

In einer bevorzugten Ausgestaltung ist die Kammer zweiteilig aufgebaut. Die den ersten Kammerbereich und damit die erste Zone des Hohlraums umschließenden Wände werden überwiegend durch die Innenflächen des Trommelkörpers und des Abdeckblechs gebildet. Die den zweiten Kammerbereich und damit die zweite Zone des Hohlraums umschließenden Wände sind die Rohrwände des bei dieser Ausführungsform rohrförmig ausgebildeten Achskörpers. Bei dieser Ausführungsform ist der Wandabschnitt aus Filtermaterial eine Öffnung in den Rohrwänden.

Vorzugsweise ist auch die Öffnung, über die die beiden Kammerbereiche in Verbindung stehen, eine Öffnung in den Rohrwänden des Achskörpers.

Gemäß einer weiteren Ausgestaltung kann in die Kammer eine Lufteinspeisung münden, wobei die eingespeiste Luft aktiv mit einem Energiewandler und/oder passiv mittels einer Fahrluftzuströmung erzeugt ist.

Mittels der Lufteinspeisung lässt sich in der Kammer und damit im Innenraum eine gezielte Luftströmung aufbauen. Diese Luftströmung lässt sich so lenken, dass im Fahrbetrieb neu gebildete Staubpartikel von der Luftströmung mitgerissen und an einen Ort innerhalb der Kammer transportiert werden, an dem sie sich ansammeln, so dass an diesem Ort von Zeit zu Zeit eine Entleerung erfolgen kann.

Eine weitere Ausgestaltung sieht ein an die Kammer angeschlossenes und nach außen abgedichtetes Druckausgleichselement vor. Das Druckausgleichselement kann zum Beispiel eine elastische Membran sein oder ein federbelastetes Schiebeelement, welches in einem Aufnahmegehäuse angeordnet ist.

Das Druckausgleichselement sorgt dafür, dass im Innenraum kein gegenüber der Umgebung erhöhter Luftdruck auftreten kann. Denn ein innen höherer Druck könnte dazu führen, dass Staubpartikel nach außen transportiert werden. Im Neuzustand der Bremse kann dies praktisch nicht passieren, da ja bereits über den Wandabschnitt aus Filtermaterial ein Luftaustausch und damit ein Druckausgleich zwischen Innen und Außen erfolgt. Dies kann sich allerdings ändern, wenn sich im Laufe des Fahrbetriebs das Filtermaterial mehr und mehr mit Staubpartikeln zusetzt, weshalb spätestens dann der Druckausgleich über das zusätzliche Druckausgleichselement erfolgt.

Von Vorteil für das Auffangen des Bremsstaubs kann es sein, wenn an einer der Wände, welche die Kammer und damit den Innenraum umschließen, ein Sammelgehäuse angebracht ist, in dem sich im Laufe des Bremsbetriebs die Bremsstaubpartikel ansammeln können. Vorzugsweise ist das Sammelgehäuse zu seiner Entleerung lösbar angebracht. Vorzugsweise ist das Sammelgehäuse außerdem von außen her zugänglich, so dass ein vorheriges Abziehen der Bremstrommel nicht erforderlich ist.

Gemäß einer Ausgestaltung kann das Sammelgehäuse bezüglich Schwerkraft und Umdrehungsrichtung von abgeriebenen Bremspartikeln als eine Richtungsfalle ausgebildet sein, oder das Sammelgehäuse kann von Luft durchströmbar sein.

Von Vorteil für das Auffangen des sich bildenden Bremsstaubs kann es außerdem sein, wenn die Wand, an der das Sammelgehäuse angebracht ist, in Hauptdrehrichtung der Bremstrommel hinter einer der Bremsbacken angeordnet ist.

Von Vorteil für das Auffangen des sich bildenden Bremsstaubs kann es außerdem sein, wenn das Sammelgehäuse mit einem austauschbaren Sammelfilter bestückt ist, oder wenn in dem Sammelgehäuse ein Bindemittel für Bremsstaubpartikel angeordnet ist.

Gemäß einer weiteren Ausführungsform ist die für Staubpartikel nicht passierbare Öffnung ein Rohr von rundem oder unrundem Rohrquerschnitt, wobei das Rohr an mindestens einem Rohrende mit Mitteln zum Halten des Filtermaterials in dem Rohr versehen ist.

Gemäß einer weiteren Ausführungsform können die Mittel zum Halten des Filtermaterials aus radial nach innen weisenden Wandabschnitten des Rohrs bestehen und/oder aus einem die Öffnung an dem Rohrende abdeckenden, temporär zu entfernenden Maschenelement.

Ausführungsbeispiele einer erfindungsgemäßen Fahrzeugtrommelbremse werden nachfolgend anhand der Zeichnungen näher erläutert. Darin zeigen:
- Fig. 1: eine Fahrzeugtrommelbremse in einem Schnitt längs der Trommeldrehachse;
- Fig. 2: eine perspektivische Ansicht der Fahrzeugtrommelbremse mit Blickrichtung vom Fahrzeuginnen her;
- Fig. 3: eine weitere Ausführungsform einer Fahrzeugtrommelbremse in einem Schnitt längs der Trommeldrehachse;
- Fig. 4: eine weitere Ausführungsform einer Fahrzeugtrommelbremse in einem Schnitt längs der Trommeldrehachse.

Die nachfolgend näher beschriebene Fahrzeugtrommelbremse findet Anwendung an einer Achse eines Fahrzeugs und vorzugsweise eines Nutzfahrzeuganhängers.

An jedem Ende der lang gestreckten Fahrzeugachse befindet sich jeweils eine Fahrzeugtrommelbremse. Den Grundkörper der Fahrzeugachse bildet ein im Querschnitt runder oder eckiger Achskörper 3. An jedem der beiden Enden des Achskörpers 3 ist ein Bremsträger 4 der Fahrzeugtrommelbremse an dem Achskörper 3 befestigt, z. B. durch Verschweißen des Bremsträgers 4 mit der Außenseite des Achskörpers 3.

Das unmittelbare Ende des Achskörpers 3 bildet jeweils ein Achsschenkel 3A. Auf diesem ist über zwei oder mehr Wälzlager eine Radnabe 6 drehbar gelagert. Bestandteile der Radnabe 6 sind unter anderem ein Nabengrundkörper 7 sowie ein sich von dem Grundkörper nach radial außen erstreckender Nabenflansch 8. Die Radnabe 6 ist mittels einer Dichtung 9 gegenüber dem Achskörper 3 abgedichtet.

An dem Nabenflansch 8 befestigt ist die Bremstrommel der Fahrzeugtrommelbremse. Vorzugsweise ist auch das zugehörige Fahrzeugrad an dem Nabenflansch 8 befestigt. Die Befestigung des Trommelkörpers der Bremstrommel und vorzugsweise auch des Fahrzeugrades erfolgt im üblicher Weise mittels mehrerer Schraubbolzen 16, die gleichmäßig über den Umfang des Nabenflanschs 8 verteilt angeordnet sind.

Der Trommelkörper 11 der Bremstrommel ist einteilig und topfförmig aufgebaut. Er setzt sich aus einem innenseitig mit einer zylindrischen Bremsfläche 12A versehenen Trommelmantel 12 und einem Flansch 13 zusammen, wobei der Flansch 13 an der einen Stirnseite des Trommelmantels 12 angeordnet ist, sich von dem Trommelmantel 12 nach radial innen erstreckt und über seinen Umfang verteilt mit Bohrungen zur Hindurchführung der bereits erwähnten Schraubbolzen 16 versehen ist. Der Flansch 13 des Trommelkörpers 11 ist daher mittels der Schraubbolzen 16 an dem Nabenflansch 8 befestigt. Indem der Flansch 13 über seinen gesamten Umfang flach gegen den Nabenflansch 8 anliegt, besteht zwischen beiden Bauteilen eine spaltfreie und dichte Verbindung.

An seiner anderen Stirnseite ist der Trommelkörper 11 durch ein Abdeckblech 20 verschlossen, welches sich quer zur Längsrichtung der Fahrzeugachse erstreckt. Das Abdeckblech 20 ist starr an dem Bremsträger 4 befestigt und diesem gegenüber abgedichtet. Der Bremsträger 4 wiederum ist starr an dem Achskörper 3 der Fahrzeugachse befestigt.

Der aus dem Trommelmantel 12 und dem Flansch 13 bestehende und im Fahrbetrieb rotierende Trommelkörper 11 bildet gemeinsam mit dem achsfesten und daher nicht rotierenden Abdeckblech 20 eine funktionale Baugruppe, die nachfolgend auch als Trommelanordnung bezeichnet wird.

Zur Betätigung der Fahrzeugtrommelbremse ist an dem achsfesten Bremsträger 4 eine Spreizeinrichtung angeordnet. Bei einer Nutzfahrzeugbremse arbeitet diese üblicherweise druckluftbetätigt. Bestandteil der Spreizeinrichtung sind z. B. zwei Spreiznocken, die an dem Bremsträger 4 drehbar gelagert sind und mit ihren Nockenflächen gegen Bremsbacken 22 arbeiten, die schwenkbeweglich an dem Bremsträger 4 gelagert sind.

Durch Spreizen der Spreizeinrichtung werden die jeweils bogenförmig gestalteten Bremsbacken 22 nach radial außen bewegt. Sie pressen dabei mit ihrem nach außen weisenden Reibbelag 22A von innen gegen die zylindrische Bremsfläche 12A des Trommelmantels 12, wodurch das Fahrzeug durch Reibung abgebremst wird.

Beim Bremsen kommt es mit der Zeit zu einer relativ starken Ansammlung von Bremsstaub im Innenraum 30 der Trommelanordnung. Die Staubpartikel, aus denen sich der Bremsstaub zusammensetzt, rühren überwiegend von dem sich abnutzenden Reibbelag 22A der Bremsbacken 22 her, aber auch von der sich ebenfalls abnutzenden Bremsfläche 12A an der zylindrischen Innenwand des Trommelmantels 12.

Aus Gründen vor allem des Umweltschutzes ist gefordert, dass der im Bremsbetrieb zwangsläufig entstehende Bremsstaub möglichst nicht in die Umgebung gelangt. Daher sind bei der erfindungsgemäßen Trommelanordnung Maßnahmen getroffen, dass der in ihrem Innenraum 30 anfallende Bremsstaub nicht nach außerhalb der Trommelanordnung gelangen kann. Dies wird erreicht, indem der Innenraum 30 der Trommelanordnung zugleich eine vollständig von Wänden umschlossene und nach außen, d. h. in die Umgebung, vollständig abgedichtete Kammer ist.

Die Wände der so gekapselten Kammer sind die Innenwände, Innenwandabschnitte bzw. Innenseiten der gemeinsam den Innenraum 30 umschließenden Bauteile bzw. Baugruppen. Zu den Bauteilen bzw. Baugruppen gehören zunächst der Trommelmantel 12 und der Flansch 13 des Trommelkörpers 11 sowie das Abdeckblech 20. Zu den Bauteilen bzw. Baugruppen können aber auch alle übrigen an der Umschließung des Innenraums 30 beteiligten Wände und Wandabschnitte gehören, insbesondere die dem Innenraum 30 zugewandten Wände oder Wandabschnitte des Nabengrundkörpers 7, des Nabenflanschs 8, des Bremsträgers 4 oder gegebenenfalls sogar des Achskörpers 3.

Insbesondere entsteht erst durch gegenseitige Abdichtungen dieser Bauteile bzw. Baugruppen die erfindungsgemäße Kammer, aus der Staubpartikel nicht entweichen können.

Wichtig ist allerdings nur die Undurchlässigkeit der Wände der Kammer für Staubpartikel. Hingegen ist ein reiner Luftaustausch über die Wände der Kammer nicht nachteilig, er kann sogar angestrebt sein. Daher besteht zumindest ein Wandabschnitt 33 der den Innenraum 30 umschließenden Wände aus einem Filtermaterial, welches für Luft, jedoch nicht für Staubpartikel durchlässig ist. Mit anderen Worten: Dieser Wandabschnitt 33 ist zwar in konstruktiver Hinsicht zunächst eine Öffnung. Diese jedoch ist vollständig mit Filtermaterial ausgefüllt oder angefüllt und stellt somit einen - luftdurchlässigen - Wandabschnitt 33 dar, der Bremsstaubpartikel vollständig zurückzuhalten vermag.

Für den durch die Luftdurchlässigkeit des Wandabschnitts 33 erzielten Luftaustausch ist nicht entscheidend, in welchem der gemeinsam den Innenraum 30 umschließenden Bauteile bzw. Baugruppen sich der Wandabschnitt 33 aus Filtermaterial befindet. Hierfür bestehen verschiedene Alternativen, die zudem auch addiert werden können.

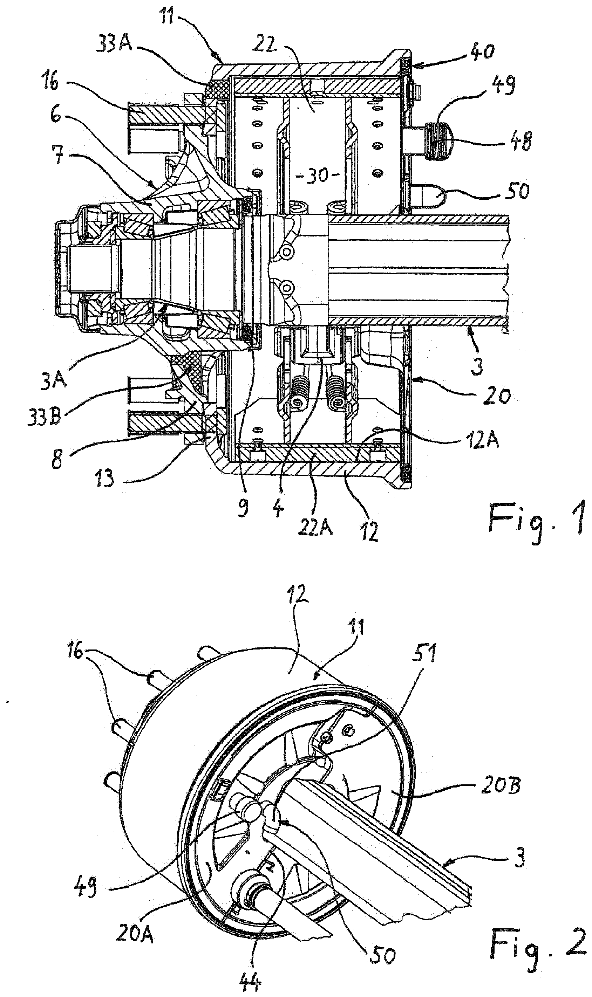

Zum Beispiel kann sich, wie dies die Fig. 1 illustriert, ein Wandabschnitt 33A aus Filtermaterial an dem Flansch 13 des Trommelkörpers 11 befinden. Alternativ oder zusätzlich kann sich ein Wandabschnitt 33B aus Filtermaterial an dem Nabenflansch 8 der Radnabe 6 befinden.

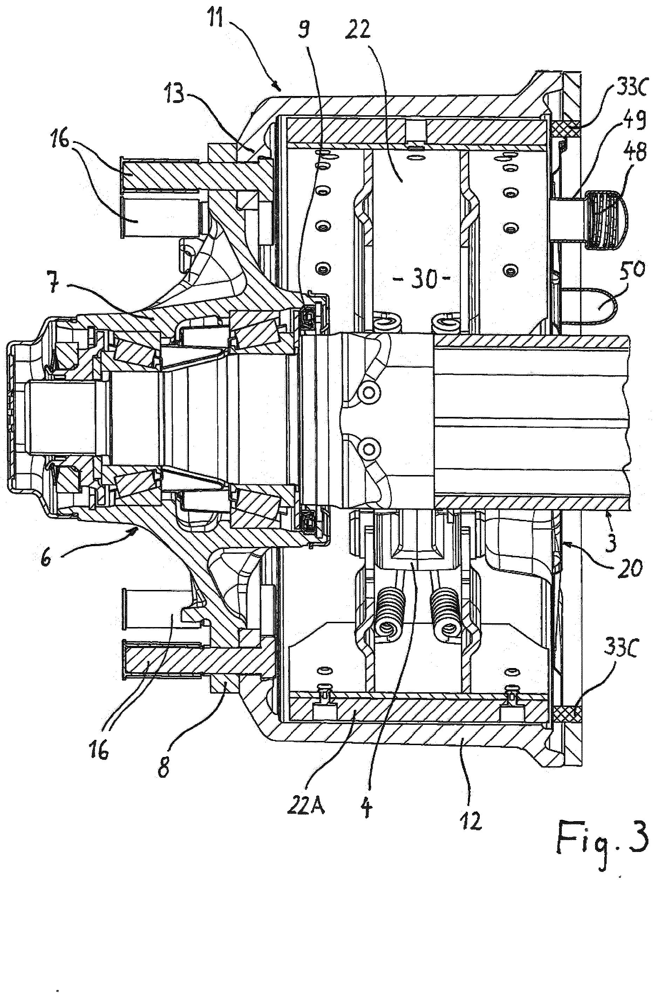

Eine andere Variante ist in Fig. 3 illustriert. Bei dieser Variante befindet sich der Wandabschnitt 33C aus Filtermaterial an dem Abdeckblech 20. In der konkret dargestellten Situation befindet sich der Wandabschnitt 33C nahe zu dem Außenumfang des Abdeckblechs 20 auf ungefähr jenem Radius in Bezug auf die Trommeldrehachse, auf dem auch die Bremsbacken 22 mit ihren Reibbelägen 22A gegen die Bremsfläche 12A innen an dem Trommelmantel 12 anliegen. Denn vor allem an diesem Ort findet die Bremsstaubentwicklung statt.

Es besteht auch die Möglichkeit, die bei der Positionierung der Wandabschnitte 33 aus Filtermaterial bestehenden Alternativen baulich zu kombinieren oder aufzuteilen. Zum Beispiel kann das Filtermaterial so angeordnet und von solcher Geometrie und Größe sein, dass sich das Filtermaterial 33 mit einem Teil seiner Fläche an dem Flansch 13 und mit dem übrigen Teil seiner Fläche an dem Trommelmantel 12 der Bremstrommel befindet.

Zur erleichterten Austauschbarkeit kann das Filtermaterial von einem Rahmen, d.h. einem Filterrahmen umschlossen sein, der in den Wandabschnitt 33 von außen her eingesetzt ist. Vorzugsweise sind Verriegelungsstrukturen vorhanden, an denen der Filterrahmen verriegelbar ist, wobei er zwecks Reinigung oder Austauschs abnehmbar ist.

Um ein Austreten von Bremsstaub an der zweiten Stirnseite des Trommelmantels 12 zu unterbinden, also zwischen dem sich drehenden Trommelmantel 12 und dem nicht drehenden Abdeckblech 20, ist in diesem Bereich eine Schleifdichtung 40 vorhanden, vorzugsweise ein entsprechend groß dimensionierter Wellendichtring. Bestandteil des Wellendichtrings 40 ist eine Dichtlippe. Eine an der Dichtlippe ausgebildete Schleiffläche stützt sich dauerhaft an einer ringförmigen Fläche abstützt, die Bestandteil des Abdeckblechs 20 ist oder zumindest fest angeordnet gegenüber dem Abdeckblech 20 ist.

Für eine erleichterte Wartung der Bremse ist von Vorteil, dass das Abdeckblech 20 zweiteilig aufgebaut ist und aus zwei trennbaren, flächig gestalteten Hälften 20A, 20B besteht. Damit auch an der Trennstelle 44 der beiden Hälften 20A, 20B kein Staubaustritt erfolgen kann, ist die Trennstelle 44 mit einem geeigneten Dichtmittel verschlossen.

Die den abgedichteten Innenraum 30 umschließende Kammer kann, wie dies die bisher beschriebenen Ausführungsformen zeigen, einteilig mit einem nicht unterteilten Innenraumvolumen ausgebildet sein.

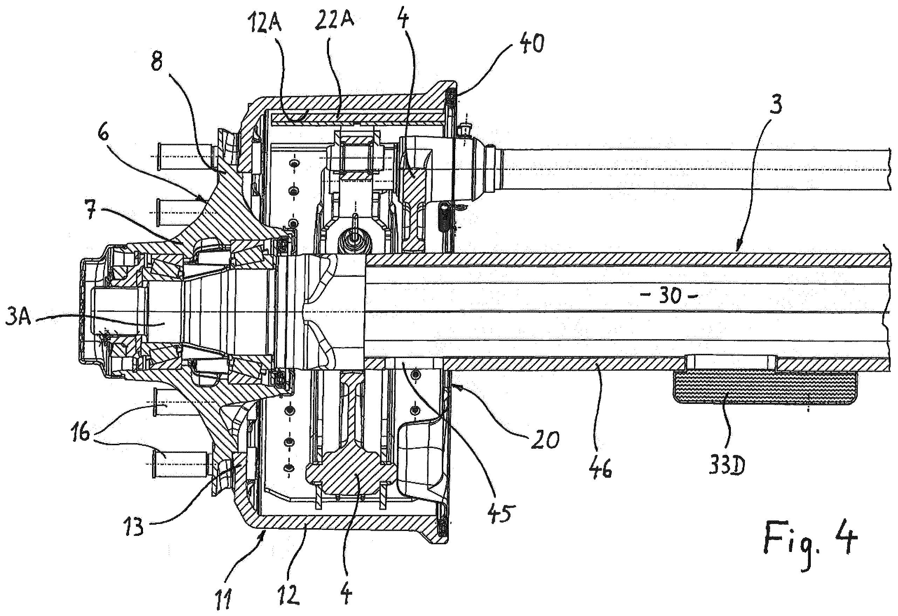

Bei der weiteren Ausführungsform nach Fig. 4 ist, damit sich der Bremsstaub primär in dem Achskörper 3 ansammeln kann, der Achskörper 3 zumindest auf einem Teil seiner Länge als ein Rohr und damit als ein Hohlraum ausgebildet. Die Kammer ist bei dieser Ausführungsform zweiteilig aus zwei räumlich getrennt angeordneten Kammerbereichen aufgebaut, die jeweils eine Zone des Innenraums aufnehmen. Die beiden Kammerbereiche und Zonen stehen über eine Öffnung 45 in Verbindung, die für Luft und Staubpartikel ungehindert passierbar ist. Die den ersten Kammerbereich und damit die erste Zone umschließenden Wände werden hier überwiegend durch die Innenflächen des Trommelkörpers 11 und des Abdeckblechs 20 gebildet. Die den zweiten Kammerbereich und damit die zweite Zone umschließenden Wände hingegen sind die Rohrwände 46 des hohlen Achskörpers 3, und der Wandabschnitt 33D aus Filtermaterial ist eine Öffnung in diesen Rohrwänden 46.

Bei dieser Ausführungsform sammelt sich daher der Bremsstaub primär im Inneren des Achskörpers 3 an, was für das Fahrwerk des Fahrzeugs mit fahrdynamischen Vorteilen verbunden ist.

Auch die Öffnung 45, über die die zwei Kammerbereiche in einer offenen und auch für Bremsstaub passierbaren Verbindung stehen, befindet sich in den Rohrwänden 46 des Achskörpers 3.

Bei allen Ausführungsformen kann vorgesehen sein, dass eine Lufteinspeisung 50 in den Innenraum 30 mündet. Der eingespeiste Luftstrom kann mit rein passiven Mitteln erzeugt werden, nämlich mittels einer Fahrtwindzuströmung. Zum Zwecke der Lufteinspeisung ist außen an dem Abdeckblech 20 ein Stutzen 51 befestigt, dessen eine Öffnung in den Innenraum 30 mündet, während die andere Öffnung so ausgerichtet ist, dass bei Fahrt des Fahrzeugs der Fahrtwind in diese Öffnung drückt. In dem Strömungsquerschnitt des Stutzens 51 ist Filtermaterial angeordnet, so dass im Innenraum 30 vorhandener Bremsstaub in keinem Fall durch den Stutzen 51 hindurch nach außen gelangen kann.

Mittels der Lufteinspeisung 50 lässt sich in dem Innenraum 30 eine gezielte Luftströmung aufbauen. Im Fahrbetrieb neu gebildete Staubpartikel werden von der Luftströmung mitgerissen und an einen Ort transportiert, an dem sie sich ansammeln. In Fig. 5 zum Beispiel ist dieser Ort der Hohlraum des Achskörpers 3 vor dem abnehmbaren Wandabschnitt 33D aus Filtermaterial. Wird daher der Wandabschnitt 33D entfernt, kann der dahinter angesammelte Bremsstaub entnommen werden.

Bei den Ausführungsbeispielen Figuren 1 bis 3 ist ein Druckausgleichselement 48 außen an die Kammer angesetzt. Das Druckausgleichselement 48 ist so an dem Abdeckblech 20 angeordnet, dass es einen nach außen, also in die Umgebung vollständig abgedichteten Wandabschnitt des Abdeckblechs 20 bildet.

Das Druckausgleichselement 48 sorgt dafür, dass im Innenraum 30 kein gegenüber der Umgebung erhöhter Luftdruck auftreten kann. Denn ein solcher könnte dazu führen, dass Staubpartikel nach außen transportiert werden. Im Neuzustand der Bremse kann dies praktisch nicht passieren, da ja bereits über das in den Wandabschnitten 33, 33A, 33B, 33C, 33D angeordnete Filtermaterial ein Luftaustausch und damit ein Druckausgleich zwischen Innen und Außen erfolgt. Dies kann sich allerdings ändern, wenn sich im Laufe des Fahrbetriebs das Filtermaterial mehr und mehr mit Staubpartikeln zusetzt, weshalb spätestens dann der Druckausgleich über das Druckausgleichselement 48 erfolgt.

Das Druckausgleichselement 48 ist z. B. eine elastische und dadurch bei Überdruck nachgiebige Membran. Oder das Druckausgleichselement 48 ist ein federbelastetes und dadurch nachgiebiges Schiebeelement, welches in einem nach außen hin geschlossenen Aufnahmegehäuse 49 angeordnet ist.

Das Druckausgleichselement 48 bildet einen Wandabschnitt jener Wände, die gemeinsam den Innenraum 30 umschließen. Die Wirkung des Druckausgleichselements 48 besteht darin, einen Überdruck im Innenraum 30 gegenüber dem Druck in der Umgebung zu vermeiden, zumindest aber die Druckdifferenz zwischen innen und außen so gering zu halten, dass Bremsstaubpartikel nicht aufgrund der Druckdifferenz in die Umgebung entweichen.

Das Druckausgleichselement 48 ist von Vorteil, obwohl die Kammer keinerlei Öffnung in die Umgebung aufweist und obwohl die Staubpartikel im Inneren der Kammer z. B. in einer Partikelfalle aufgefangen und darin gesammelt werden. Denn auch in diesem Fall müssen Temperatur- und damit Druckschwankungen, die durch die Bremsenergie hervorgerufen werden, über das Druckausgleichselement kompensiert werden.

### Bezugszeichenliste

- 3: Achskörper
- 3A: Achsschenkel
- 4: Bremsträger
- 6: Radnabe
- 7: Nabengrundkörper
- 8: Nabenflansch
- 9: Dichtung
- 11: Trommelkörper
- 12: Trommelmantel
- 12A: Bremsfläche
- 13: Flansch
- 16: Schraubbolzen
- 20: Abdeckblech
- 20A: Abdeckblechhälfte
- 20B: Abdeckblechhälfte
- 22: Bremsbacke
- 22A: Reibbelag
- 30: Innenraum
- 33: Wandabschnitt; Filtermaterial
- 33A: Wandabschnitt; Filtermaterial
- 33B: Wandabschnitt; Filtermaterial
- 33C: Wandabschnitt; Filtermaterial
- 33D: Wandabschnitt; Filtermaterial
- 40: Schleifdichtung, Wellendichtring
- 44: Trennstelle
- 45: Öffnung
- 46: Rohrwand
- 48: Druckausgleichselement
- 49: Aufnahmegehäuse
- 50: Lufteinspeisung
- 51: Stutzen

## Patentansprüche

1. Fahrzeugtrommelbremse, insbesondere für einen Nutzfahrzeuganhänger, mit einer einen Innenraum (30) umschließenden Trommelanordnung aus einem Trommelkörper (11), welcher gegenüber einer Fahrzeugachse rotierbar ist, und einem Abdeckblech (20), welches fest mit der Fahrzeugachse verbunden ist,
wobei der Trommelkörper (11) topfförmig gestaltet ist und sich aus einem innenseitig mit einer Bremsfläche (12A) versehenen Trommelmantel (12) und einem an einer Stirnseite des Trommelmantels (12) angeordneten Flansch (13) zusammensetzt, wobei der Flansch (13) mit einem Nabenflansch (8) einer gegenüber der Fahrzeugachse rotierbaren Radnabe (6) verschraubt ist,
wobei das Abdeckblech (20) die andere, zweite Stirnseite des Trommelmantels (12) bedeckt und an einem Bremsträger (4) befestigt ist, der mit der Fahrzeugachse verbunden ist,
und wobei zwei in dem Innenraum (30) angeordnete Bremsbacken (22) beweglich an dem Bremsträger (4) gelagert und gegen die Bremsfläche (12A) des Trommelmantels (12) aufspreizbar sind,
wobei der Innenraum (30) eine vollständig von Wänden umschlossene und nach außen abgedichtete Kammer ist, und **dadurch gekennzeichnet, dass** zumindest ein Wandabschnitt (33, 33A, 33B, 33C, 33D) der Wände aus einem für Luft durchlässigen und Staubpartikel zurückhaltenden Filtermaterial und/oder aus einem Druckausgleichselement (48) besteht.

2. Fahrzeugtrommelbremse nach Anspruch 1, **dadurch gekennzeichnet, dass** der Wandabschnitt (33, 33A, 33B, 33C, 33D) eine den Innenraum (30) mit der Umgebung verbindende Öffnung in einer der Wände ist, und die Öffnung durch das Filtermaterial verschlossen ist.

3. Fahrzeugtrommelbremse nach Anspruch 2, **dadurch gekennzeichnet, dass** das Filtermaterial von einem Filterrahmen umschlossen ist, der in die Öffnung eingesetzt ist.

4. Fahrzeugtrommelbremse nach Anspruch 3, **dadurch gekennzeichnet, dass** der Filterrahmen lösbar in die Öffnung eingesetzt ist.

5. Fahrzeugtrommelbremse nach einem der vorangehenden Ansprüche, **dadurch gekennzeichnet, dass** das Filtermaterial ein Partikelfilter ist.

6. Fahrzeugtrommelbremse nach einem der vorangehenden Ansprüche, **dadurch gekennzeichnet, dass** sich der Wandabschnitt (33A) aus Filtermaterial in dem Trommelkörper (11) befindet, vorzugsweise in dem Flansch (13) des Trommelkörpers.

7. Fahrzeugtrommelbremse nach einem der vorangehenden Ansprüche, **dadurch gekennzeichnet, dass** sich der Wandabschnitt (33C) aus Filtermaterial in dem Abdeckblech (20) befindet.

8. Fahrzeugtrommelbremse nach einem der vorangehenden Ansprüche, **dadurch gekennzeichnet, dass** eine der die Kammer umschließenden Wände durch Flächen des Nabenflanschs (8) der Radnabe (6) gebildet wird, wobei sich der Wandabschnitt (33B) aus Filtermaterial in dem Nabenflansch (8) befindet.

9. Fahrzeugtrommelbremse nach einem der vorangehenden Ansprüche, **dadurch gekennzeichnet, dass** eine der die Kammer umschließenden Wände durch Flächen des Bremsträgers (4) gebildet wird, wobei sich der Wandabschnitt (33) aus Filtermaterial an dem Bremsträger befindet.

10. Fahrzeugtrommelbremse nach einem der vorangehenden Ansprüche, **dadurch gekennzeichnet, dass** eine der die Kammer umschließenden Wände durch Flächen eines Achskörpers (3) der Fahrzeugachse gebildet wird, wobei sich der Wandabschnitt (33) aus Filtermaterial an dem Achskörper (3) befindet.

11. Fahrzeugtrommelbremse nach einem der vorangehenden Ansprüche, **gekennzeichnet durch** eine Schleifdichtung (40), welche sich an der zweiten Stirnseite des Trommelmantels (12) über dessen gesamten Umfang erstreckt und ausgebildet ist, den Trommelmantel (12) gegenüber dem Abdeckblech (20) abzudichten.

12. Fahrzeugtrommelbremse nach Anspruch 11, **dadurch gekennzeichnet, dass** Bestandteil der Schleifdichtung (40) eine Dichtlippe ist, und dass sich eine an der Dichtlippe ausgebildete Schleiffläche an einer ringförmigen Fläche abstützt, die Bestandteil des Abdeckblechs (20) ist.

13. Fahrzeugtrommelbremse nach einem der vorangehenden Ansprüche, **dadurch gekennzeichnet, dass** das Abdeckblech (20) zweiteilig aufgebaut ist und aus zwei getrennten Hälften (20A, 20B) besteht, und dass die Trennstelle (44) mit einem Dichtmittel verschlossen ist.

14. Fahrzeugtrommelbremse nach einem der Ansprüche 1 - 13, **dadurch gekennzeichnet, dass** die Kammer einteilig mit einem nicht unterteilten Innenraumvolumen ausgebildet ist.

15. Fahrzeugtrommelbremse nach einem der Ansprüche 1 - 13, **dadurch gekennzeichnet, dass** die Kammer mehrteilig aus räumlich getrennt angeordneten Kammerbereichen aufgebaut ist, die jeweils eine Zone des Innenraums (30) aufnehmen, wobei die Kammerbereiche und Zonen über eine für Luft und Staubpartikel ungehindert passierbare Öffnung (45) in Verbindung stehen.

16. Fahrzeugtrommelbremse nach Anspruch 15, **dadurch gekennzeichnet, dass** die Kammer zweiteilig aufgebaut ist, wobei die den ersten Kammerbereich und damit die erste Zone umschließenden Wände überwiegend durch Innenflächen des Trommelkörpers (11) und des Abdeckblechs (20) gebildet werden, die den zweiten Kammerbereich und damit die zweite Zone umschließenden Wände Rohrwände (46) des rohrförmig ausgebildeten Achskörpers (3) sind, und der Wandabschnitt (33D) aus Filtermaterial eine Öffnung in den Rohrwänden (46) ist.

17. Fahrzeugtrommelbremse nach Anspruch 16, **dadurch gekennzeichnet, dass** auch die Öffnung (45), über die die beiden Kammerbereiche in Verbindung stehen, eine Öffnung in den Rohrwänden (46) ist.

18. Fahrzeugtrommelbremse nach einem der vorangehenden Ansprüche, **dadurch gekennzeichnet, dass** eine Lufteinspeisung (50) in die Kammer mündet, wobei die eingespeiste Luft aktiv mit einem Energiewandler und/oder passiv mittels einer Fahrluftzuströmung erzeugt ist.

19. Fahrzeugtrommelbremse nach einem der vorangehenden Ansprüche, **gekennzeichnet durch** ein an die Kammer angeschlossenes und nach außen abgedichtetes Druckausgleichselement (48).

20. Fahrzeugtrommelbremse nach Anspruch 19, **dadurch gekennzeichnet, dass** das Druckausgleichselement (48) eine elastische Membran ist, oder ein federbelastetes Schiebeelement, welches in einem Aufnahmegehäuse (49) angeordnet ist.

21. Fahrzeugtrommelbremse nach einem der vorangehenden Ansprüche, **dadurch gekennzeichnet, dass** an einer der die Kammer umschließenden Wände ein Sammelgehäuse für Bremsstaubpartikel angebracht ist.

22. Fahrzeugtrommelbremse nach Anspruch 21, **dadurch gekennzeichnet, dass** das Sammelgehäuse zu seiner Entleerung lösbar angebracht ist.

23. Fahrzeugtrommelbremse nach Anspruch 21 oder 22, **dadurch gekennzeichnet, dass** das Sammelgehäuse bezüglich Schwerkraft und Umdrehungsrichtung von abgeriebenen Bremspartikeln als eine Richtungsfalle ausgebildet ist, oder mit Luft durchströmbar ist.

24. Fahrzeugtrommelbremse nach einem der Ansprüche 21 - 23, **dadurch gekennzeichnet, dass** die Wand, an der das Sammelgehäuse angebracht ist, in Hauptdrehrichtung der Bremstrommel hinter einer der Bremsbacken (22) angeordnet ist.

25. Fahrzeugtrommelbremse nach einem der Ansprüche 21 - 24, **dadurch gekennzeichnet, dass** das Sammelgehäuse mit einem austauschbaren Sammelfilter bestückt ist, oder dass in dem Sammelgehäuse ein Bindemittel für Bremsstaubpartikel angeordnet ist.

26. Fahrzeugtrommelbremse nach einem der vorangehenden Ansprüche, **dadurch gekennzeichnet, dass** die Öffnung ein Rohr von rundem oder unrundem Rohrquerschnitt ist, welches an mindestens einem Rohrende mit Mitteln zum Halten des Filtermaterials in dem Rohr versehen ist.

27. Fahrzeugtrommelbremse nach Anspruch 26, **dadurch gekennzeichnet, dass** die Mittel zum Halten des Filtermaterials aus radial nach innen weisenden Wandabschnitten des Rohrs bestehen und/oder aus einem die Öffnung an dem Rohrende abdeckenden, temporär zu entfernenden Maschenelement.

## Claims

1. Vehicle drum brake, in particular for a commercial vehicle trailer, comprising a drum arrangement enclosing an interior space (30), said drum arrangement comprising a drum body (11) which is rotatable relative to a vehicle axle, and a cover plate (20) which is fixedly connected to the vehicle axle,
the drum body (11) being pot-shaped and being composed of a drum shell (12) provided on the inside with a braking surface (12A) and a flange (13) arranged on an end face of the drum shell (12), the flange (13) being screwed to a hub flange (8) of a wheel hub (6) rotatable relative to the vehicle axle,
the cover plate (20) covering the other, second end face of the drum shell (12) and being fastened to a brake carrier (4) which is connected to the vehicle axle,
and two brake shoes (22) arranged in the interior space (30) being movably mounted on the brake carrier (4) and being able to be spread against the braking surface (12A) of the drum shell (12),
the interior space (30) being a chamber completely enclosed by walls and sealed to the outside, and **characterized in that** at least one wall portion (33, 33A, 33B, 33C, 33D) of the walls consists of a filter material permeable to air and retaining dust particles and/or of a pressure compensation element (48).

2. Vehicle drum brake according to claim 1, **characterized in that** the wall portion (33, 33A, 33B, 33C, 33D) is an opening in one of the walls connecting the interior space (30) to the surrounding region, and the opening is closed by the filter material.

3. Vehicle drum brake according to claim 2, **characterized in that** the filter material is enclosed by a filter frame that is inserted into the opening.

4. Vehicle drum brake according to claim 3, **characterized in that** the filter frame is removably inserted into the opening.

5. Vehicle drum brake according to any of the preceding claims, **characterized in that** the filter material is a particle filter.

6. Vehicle drum brake according to any of the preceding claims, **characterized in that** the wall portion (33A) made of filter material is located in the drum body (11), preferably in the flange (13) of the drum body.

7. Vehicle drum brake according to any of the preceding claims, **characterized in that** the wall portion (33C) made of filter material is located in the cover plate (20).

8. Vehicle drum brake according to any of the preceding claims, **characterized in that** one of the walls enclosing the chamber is formed by surfaces of the hub flange (8) of the wheel hub (6), the wall portion (33B) made of filter material being located in the hub flange (8).

9. Vehicle drum brake according to any of the preceding claims, **characterized in that** one of the walls enclosing the chamber is formed by surfaces of the brake carrier (4), the wall portion (33) made of filter material being located on the brake carrier.

10. Vehicle drum brake according to any of the preceding claims, **characterized in that** one of the walls enclosing the chamber is formed by surfaces of an axle body (3) of the vehicle axle, the wall portion (33) made of filter material being located on the axle body (3).

11. Vehicle drum brake according to any of the preceding claims, **characterized by** a sliding seal (40) which extends on the second end face of the drum shell (12) over its entire circumference and is designed to seal the drum shell (12) with respect to the cover plate (20).

12. Vehicle drum brake according to claim 11, **characterized in that** a sealing lip is a component of the sliding seal (40), **and in that** a sliding surface formed on the sealing lip is supported on an annular surface which is a component of the cover plate (20).

13. Vehicle drum brake according to any of the preceding claims, **characterized in that** the cover plate (20) is constructed in two parts and consists of two separate halves (20A, 20B), **and in that** the separation point (44) is closed with a sealing agent.

14. Vehicle drum brake according to any of claims 1 - 13, **characterized in that** the chamber is formed in one piece with an undivided interior volume.

15. Vehicle drum brake according to any of claims 1 - 13, **characterized in that** the chamber is constructed in a plurality of parts from spatially separated chamber regions, each of which accommodates a zone of the interior space (30), the chamber regions and zones being connected via an opening (45) through which air and dust particles can pass unhindered.

16. Vehicle drum brake according to claim 15, **characterized in that** the chamber is constructed in two parts, the walls enclosing the first chamber region and thus the first zone being predominantly formed by inner surfaces of the drum body (11) and of the cover plate (20), the walls enclosing the second chamber region and thus the second zone being tube walls (46) of the tubular axle body (3), and the wall portion (33D) made of filter material being an opening in the tube walls (46).

17. Vehicle drum brake according to claim 16, **characterized in that** the opening (45) through which the two chamber regions are connected is also an opening in the tube walls (46).

18. Vehicle drum brake according to any of the preceding claims, **characterized in that** an air inlet (50) opens into the chamber, the supplied air being generated actively with an energy converter and/or passively by means of a driving air inflow.

19. Vehicle drum brake according to any of the preceding claims, **characterized by** a pressure compensation element (48) connected to the chamber and sealed to the outside.

20. Vehicle drum brake according to claim 19, **characterized in that** the pressure compensation element (48) is an elastic membrane, or a spring-loaded sliding element which is arranged in a receiving housing (49).

21. Vehicle drum brake according to any of the preceding claims,
**characterized in that** a collecting housing for brake dust particles is attached to one of the walls enclosing the chamber.

22. Vehicle drum brake according to claim 21, **characterized in that** the collecting housing is detachably attached for emptying.

23. Vehicle drum brake according to claim 21 or 22, **characterized in that** the collecting housing is designed as a directional trap with respect to gravity and the direction of rotation of abraded brake particles, or can be flowed through by air.

24. Vehicle drum brake according to any of claims 21 - 23,
**characterized in that** the wall to which the collecting housing is attached is arranged behind one of the brake shoes (22) in the main direction of rotation of the brake drum.

25. Vehicle drum brake according to any of claims 21 - 24,
**characterized in that** the collecting housing is equipped with a replaceable collecting filter, **or in that** a binding agent for brake dust particles is arranged in the collecting housing.

26. Vehicle drum brake according to any of the preceding claims,
**characterized in that** the opening is a tube of round or non-round cross-section, which is provided at at least one tube end with means for holding the filter material in the tube.

27. Vehicle drum brake according to claim 26, **characterized in that** the means for holding the filter material consist of radially inwardly facing wall portions of the tube and/or of a temporarily removable mesh element covering the opening at the tube end.

## Revendications

1. Frein à tambour de véhicule, en particulier pour une remorque de véhicule utilitaire, avec un agencement de tambour entourant un espace intérieur (30), constitué d'un corps de tambour (11), lequel peut tourner par rapport à un essieu de véhicule, et d'une tôle de recouvrement (20), laquelle est reliée de manière fixe à l'essieu de véhicule,
dans lequel le corps de tambour (11) est conçu en forme de pot et se compose d'une enveloppe de tambour (12) pourvue d'une surface de freinage (12A) du côté intérieur et d'une bride (13) disposée sur un côté frontal de l'enveloppe de tambour (12), dans lequel la bride (13) est vissée à une bride de moyeu (8) d'un moyeu de roue (6) pouvant tourner par rapport à l'essieu de véhicule,
dans lequel la tôle de recouvrement (20) recouvre l'autre, deuxième côté frontal de l'enveloppe de tambour (12) et est fixée à un support de frein (4) qui est relié à l'essieu de véhicule,
et dans lequel deux mâchoires de frein (22) disposées dans l'espace intérieur (30) sont montées mobiles sur le support de frein (4) et peuvent être écartées contre la surface de freinage (12A) de l'enveloppe de tambour (12),
dans lequel l'espace intérieur (30) est une chambre entièrement entourée de parois et étanche vis-à-vis de l'extérieur, et **caractérisé en ce qu'**au moins une
section de paroi (33, 33A, 33B, 33C, 33D) des parois est constituée d'un matériau filtrant perméable à l'air et retenant les particules de poussière et/ou d'un élément de compensation de pression (48).

2. Frein à tambour de véhicule selon la revendication 1, **caractérisé en ce que** la section de paroi (33, 33A, 33B, 33C, 33D) est une ouverture dans l'une des parois reliant l'espace intérieur (30) à l'environnement, et l'ouverture est fermée par le matériau filtrant.

3. Frein à tambour de véhicule selon la revendication 2, **caractérisé en ce que** le matériau filtrant est entouré d'un cadre de filtre qui est inséré dans l'ouverture.

4. Frein à tambour de véhicule selon la revendication 3, **caractérisé en ce que** le cadre de filtre est inséré de manière amovible dans l'ouverture.

5. Frein à tambour de véhicule selon l'une quelconque des revendications précédentes, **caractérisé en ce que** le matériau filtrant est un filtre à particules.

6. Frein à tambour de véhicule selon l'une quelconque des revendications précédentes, **caractérisé en ce que** la section de paroi (33A) en matériau filtrant est située dans le corps de tambour (11), de préférence dans la bride (13) du corps de tambour.

7. Frein à tambour de véhicule selon l'une quelconque des revendications précédentes, **caractérisé en ce que** la section de paroi (33C) en matériau filtrant est située dans la tôle de recouvrement (20).

8. Frein à tambour de véhicule selon l'une quelconque des revendications précédentes, **caractérisé en ce qu'**une des parois entourant la chambre est formée par des surfaces de la bride de moyeu (8) du moyeu de roue (6), dans lequel la section de paroi (33B) en matériau filtrant est située dans la bride de moyeu (8).

9. Frein à tambour de véhicule selon l'une quelconque des revendications précédentes, **caractérisé en ce que** l'une des parois entourant la chambre est formée par des surfaces du support de frein (4), dans lequel la section de paroi (33) en matériau filtrant est située sur le support de frein.

10. Frein à tambour de véhicule selon l'une quelconque des revendications précédentes, **caractérisé en ce que** l'une des parois entourant la chambre est formée par des surfaces d'un corps d'essieu (3) de l'essieu de véhicule, dans lequel la section de paroi (33) en matériau filtrant est située sur le corps d'essieu (3).

11. Frein à tambour de véhicule selon l'une quelconque des revendications précédentes, **caractérisé par** un joint de frottement (40), lequel s'étend sur la deuxième face frontale de l'enveloppe de tambour (12) sur toute sa périphérie et est réalisé pour rendre étanche l'enveloppe de tambour (12) par rapport à la tôle de recouvrement (20).

12. Frein à tambour de véhicule selon la revendication 11, **caractérisé en ce qu'**une lèvre d'étanchéité fait partie du joint de frottement (40), et qu'une surface de frottement réalisée sur la lèvre d'étanchéité s'appuie sur une surface annulaire qui fait partie de la tôle de recouvrement (20).

13. Frein à tambour de véhicule selon l'une quelconque des revendications précédentes, **caractérisé en ce que** la tôle de recouvrement (20) est conçue en deux parties et est constituée de deux moitiés (20A, 20B) séparées, et que le point de séparation (44) est fermé avec un moyen d'étanchéité.

14. Frein à tambour de véhicule selon l'une quelconque des revendications 1 à 13, **caractérisé en ce que** la chambre est réalisée d'une seule pièce avec un volume intérieur non compartimenté.

15. Frein à tambour de véhicule selon l'une quelconque des revendications 1 à 13, **caractérisé en ce que** la chambre est conçue en plusieurs parties de régions de chambre disposées séparément dans l'espace, qui reçoivent chacune une zone de l'espace intérieur (30), dans lequel les régions de chambre et les zones sont en communication par une ouverture (45) pouvant être traversée sans obstacle par l'air et les particules de poussière.

16. Frein à tambour de véhicule selon la revendication 15, **caractérisé en ce que** la chambre est conçue en deux parties, dans lequel les parois entourant la première région de chambre et donc la première zone sont formées principalement par des surfaces intérieures du corps de tambour (11) et de la tôle de recouvrement (20), les parois entourant la deuxième région de chambre et donc la deuxième zone sont des parois tubulaires (46) du corps d'essieu (3) réalisé de manière tubulaire, et la section de paroi (33D) en matériau filtrant est une ouverture dans les parois tubulaires (46) .

17. Frein à tambour de véhicule selon la revendication 16, **caractérisé en ce que** l'ouverture (45), par laquelle les deux régions de chambre communiquent, est également une ouverture dans les parois tubulaires (46).

18. Frein à tambour de véhicule selon l'une quelconque des revendications précédentes, **caractérisé en ce qu'**une injection d'air (50) débouche dans la chambre, dans lequel l'air injecté est produit activement avec un convertisseur d'énergie et/ou passivement au moyen d'une arrivée d'air de roulement.

19. Frein à tambour de véhicule selon l'une quelconque des revendications précédentes, **caractérisé par** un élément d'équilibrage de pression (48) raccordé à la chambre et étanchéifié par rapport à l'extérieur.

20. Frein à tambour de véhicule selon la revendication 19, **caractérisé en ce que** l'élément d'équilibrage de pression (48) est une membrane élastique, ou un élément coulissant sollicité par un ressort, lequel est disposé dans un boîtier de réception (49).

21. Frein à tambour de véhicule selon l'une quelconque des revendications précédentes, **caractérisé en ce qu'**un boîtier de collecte pour les particules de poussière de frein est monté sur l'une des parois entourant la chambre.

22. Frein à tambour de véhicule selon la revendication 21, **caractérisé en ce que** le boîtier de collecte est monté de manière amovible pour son vidage.

23. Frein à tambour de véhicule selon la revendication 21 ou 22, **caractérisé en ce que** le boîtier de collecte est réalisé comme un piège directionnel par rapport à la force de gravité et au sens de rotation des particules de frein frottées, ou peut être traversé par de l'air.

24. Frein à tambour de véhicule selon l'une quelconque des revendications 21 à 23, **caractérisé en ce que** la paroi sur laquelle est monté le boîtier de collecte est située derrière l'une des mâchoires de frein (22) dans le sens de rotation principal du tambour de frein.

25. Frein à tambour de véhicule selon l'une quelconque des revendications 21 à 24, **caractérisé en ce que** le boîtier de collecte est équipé d'un filtre de collecte remplaçable, ou qu'un agent de liaison pour les particules de poussière de frein est disposé dans le boîtier de collecte.

26. Frein à tambour de véhicule selon l'une quelconque des revendications précédentes, **caractérisé en ce que** l'ouverture est un tube de section transversale circulaire ou non circulaire, lequel est pourvu, à au moins une extrémité du tube, de moyens de retenue du matériau filtrant dans le tube.

27. Frein à tambour de véhicule selon la revendication 26, **caractérisé en ce que** les moyens de retenue du matériau filtrant sont constitués de sections de paroi du tube orientées radialement vers l'intérieur et/ou d'un élément de maillage recouvrant l'ouverture à l'extrémité du tube et à retirer temporairement.
